# EUROPEAN PATENT SPECIFICATION

(11) **EP 2 027 910 B1**
(45) Date of publication and mention of the grant of the patent: **22.12.2010**
(21) Application number: 08019480.6
(22) Date of filing: 15.07.2004
(51) Int. Cl.: B01D 63/02, B01D 65/00

(54) **Replaceable filter cartridge**
Auswechselbare Filterpatrone
Cartouche de filtre remplaçable

(30) Priority: 25.08.2003 DE 10340145
(43) Date of publication of application: 25.02.2009
(62) Divisional of application: 04763231.0
(73) Proprietor: Pall Corporation, Port Washington, NY 11050 (US)
(72) Inventor: Strohm, Gerhard, 55278 Dexheim (DE); Schnieder, Georg, 55546 Bad Kreuznach (DE); Kaul, Wilfried, 55595 Weinsheim (DE); Rohr, Reinhold, 55413 Weiler (DE)
(74) Representative: Wössner, Gottfried

(56) References cited:
- DE-A- 3 127 282
- DE-A- 4 036 978
- DE-A- 19 900 432
- US-A- 4 400 276
- US-A- 5 211 728

## Description

The invention relates to a replaceable filter cartridge for a filtering device comprising a filter housing having at least one non-filtrate inlet and at least one filtrate outlet, said replaceable filter cartridge may be inserted in said filter housing and contains at least one filter element, particularly a bundle of capillary or hollow fiber membranes, which are fixed at both ends of the cartridge in end pieces. The filter element fixed in said end pieces defines a flow path for a fluid extending from one end of the cartridge to the other. At least one retaining device supports the filter cartridge in the filter housing which indirectly or directly bears against the filter housing in the axial direction.

The filter housing is regularly comprised of a filter cartridge housing having first and second open ends and a detachable filter head at each open end.

The at least one non-filtrate inlet is often provided on the filter head, whereas the at least one filtrate outlet is arranged on the filter cartridge housing. Alternatively, the non-filtrate inlet and the filtrate outlet may be interchanged so that the filtrate outlet may be interchanged so that the filtrate outlet is disposed on the filter head and the non-filtrate inlet on the filter cartridge housing. The assignment of the connections as filtrate inlet or non-filtrate outlet depends on the mode of operation of the filtering device.

The filter element may comprise a plurality of tubular, capillary, or hollow fiber membranes. Furthermore the filter element may comprise flat tubular filter media disposed parallel to the longitudinal axis of the cartridge, such as filter membranes or woven or non-woven filter fabrics or filter membranes wound spirally around the longitudinal axis of the filter cartridge. In the case of a flat tubular filter element or a flat tubular spirally wound filter element, the membrane walls of the filter element are separated from each other by a spacer forming a non-filtrate chamber or a filtrate chamber, depending on the direction of flow through the filtering device. The filter elements are embedded with their end portions in a casting material in such a manner that their end portion is open to the non-filtrate chamber or filtrate chamber, respectively.

US patent 5,211,728 discloses a filtering device including a replaceable filter cartridge having a hollow fiber membrane bundle fixed in end pieces, said end pieces being connected to end caps providing fluid connection ports. The connection of the end pieces to the end caps is accomplished by clamshell retainer means tightly engaging the end pieces and the end caps. The filter cartridge and the end caps are accommodated in a housing. The end caps are fixed on the housing.

DE 31 27 282 discloses a filtering device comprising a housing and a hollow fiber filter cartridge. The filter cartridge accommodates the hollow fibers in end pieces made of a potting material. The end pieces are fixed in position within the housing either directly via a locking ring or via intermediate sleeves and fixing bolts. In case where axial expansion of the filter cartridge is desired only one end piece is fixed onto the housing.

DE 39 16 511 A1 discloses a filtering device in which the bundle of capillary or hollow fiber membranes is embedded at both ends in end pieces made of a casting material or sealing compound, which are in turn fixed to an inner collar or a retaining ring of the filter housing. The pressures occurring during filtration and acting on the bundle are absorbed by this inner collar. The end pieces project beyond the filter cartridge housing and sealing is effected within the filter head by means of O-rings. The filter head possesses a non-filtrate inlet and a filtrate outlet, which makes it necessary for the inner collar, which is connected to the the filter cartridge housing via fins, to be surrounded by the filtrate, which flows back into the filter head. This leads to contamination, which must be avoided.

This known filtering device further suffers from the drawback that the filter cartridge is immoveably attached to the cartridge housing. This means that following exhaustion of the capillary or hollow fiber membranes either these capillary or hollow fiber membranes must be disposed of together with the housing or, alternatively, that the capillary and hollow fiber membranes must be removed from the housing by elaborate means.

Filter modules allowing for separation of the actual filter element from the cartridge housing are sold and described in various forms. These modules always have slide-in cartridges, which can be removed from the housing.

One known first variant provides for the end pieces made of casting material of the slide-in cartridge to be fitted in its own housing comprising two terminating elements, which surround the casting material, and a middle portion, which, for example, is a perforated tube or consists of retaining bars. Sealing is effected between the end pieces and said terminating elements by an adhesive joint. Compensation of the compressive forces is effected by transfer of the forces from the end pieces to the terminating elements. The main object of the middle portion is to prevent the slide-in cartridge from collapsing. On the other hand, the middle portion also serves as protection for the capillaries during transfer, installation, and filtration.

A similar embodiment is disclosed in DE 44 01 014 A1. This device consists substantially of a tubular housing, of which both ends are closed by caps. In the housing itself there is formed an interior chamber, in which a membranous element is removably installed. This membranous element, which corresponds to the slide-in cartridge, consists substantially of a plurality of hollow fiber membranes, which surround a grating tube, which is provided with openings over its entire surface and length. Both ends of the filter cartridge have a closing member, which consists of a sealing compound, in which the hollow fiber membranes are embedded.

A drawback of this embodiment is the high expenditure involved in the production of the slide-in cartridges. Since the pressure-resistant slide-in cartridge must be completely renewed at each replacement operation, high costs are caused by the fact that the independent housing of the slide-in cartridge must also be disposed of as waste material and then recycled by elaborate means. Furthermore, the weight is unnecessarily increased by the presence of the additional housing.

A second embodiment of a slide-in cartridge provides for the end pieces of casting material or sealing compound to be bounded into a ring, which transmits the forces occurring during filtration directly to the housing via another divided ring. The slide-in cartridge has no middle portion and is thus cheap compared with the previously described embodiment. In this embodiment also, an adhesive joint involving associated drawbacks is present.

In particular, temperature changes and different coefficients of linear expansion can weaken this adhesive joint so that there is no guarantee that a good seal will prevail between the end pieces and the ring. There is no guaranteed transmission of the forces from the end pieces to the ring, which can ultimately cause the slide-in cartridge to collapse.

In a third embodiment, substantially corresponding to the first variant having an independent cartridge housing, no adhesive joint is provided, but instead the elements are jammed by means of an axial sealing ring between the slide-in cartridge and the closing cap of the filter housing. In this case the elaborate design of the slide-in cartridge is a drawback, for the independent housing for the slide-in cartridge must absorb all forces. Between the sealing compound and the terminating element of the housing there is formed a slit which is open toward the filtrate side and can thus form a source of contamination.

WO 00/67885 discloses another filtering device, into which a filter cartridge is inserted, which has, at its cartridge ends, an end piece made of a sealing compound having a cylindrical external surface. The end piece projects radially beyond the bundle of capillary fibers so that the sealing compound can be supported either on a projection of the housing or on a divided retaining ring. This engagement of the end piece from below requires a specific housing design, in order to create a supporting projection. Where a divided retaining ring is provided, there is present a considerable projection of sealing compound, which calls for an appropriately large chamber. The divided retaining ring cannot be sealed off by sealing elements so that contamination of the filtrate can take place in this region.

The end piece made of a sealing compound has a groove for the accommodation of an O-ring, but this merely involves a sealing but not a retaining function. In order to produce such an outer contour, considerable expenditure is necessary, since, on account of the sealing function, high demands on the precision of the groove must be satisfied, which, when use is made of, say, a split mold, further polishing of the sealing compound would have to be necessary. Such a groove can only be used for filters satisfying low demands. In this known arrangement twisting of the filter cartridge is not effectively prevented, and this can be the cause of damage to the filter elements.

DE 39 27 455 C1 discloses a filter module for enrichment or impoverishment and also for filtration with the aid of a semipermeable membrane, which comprises, in a filter housing, a replaceable cartridge, in the end regions of which capillaries are held in cast epoxy resin parts so as to fix them non-displaceable and fluid-tight. These cast parts are engaged by a pair of O-rings on their external surfaces for effecting a seal. In between each pair of O-rings, a clamping ring abuts the circumferential surface of the cast parts for fixing the cartridge in the filter housing.

The clamping rings are sealed off by the O-rings so that no contamination of the filtrate can occur at this point. The clamping ring is of metal, while the sealing compound is made of a plastics material. Obviously the two materials have different coefficients of thermal expansion. With this type of attachment by means of a clamping ring on a smooth external surface of the sealing compound, these different coefficients of thermal expansion can be the cause of the sealing compound, and thus the slide-in cartridge, slipping out of the holder when pressure is exerted, *ie*, during operation of the filtering device, so that there is no guarantee for a good seal at said points. In the specification this reference proposes to reduce the thermal expansion by the addition of fillers to the sealing compound, which however has the drawback that these fillers can impair the strength properties and, depending on the use to which the filter is put, possibly have a negative influence on the safety thereof in food, particularly in the case of beverage filtration. Furthermore, if the clamping force is increased to make the cartridge stay in place, deformation of the end regions may occur which may affect the flow characteristic in fluid channels near the surface.

Starting from DE 39 27 455 C1, the object of the invention is to provide a filtering cartridge which may be held in the housing in a simple manner without strains or leaks occurring by reason of temperature fluctuations.

This object is achieved by a filtering cartridge according to the features of claim 1. The end pieces are made of a casting material in which end portions of the filter element are embedded, wherein the outer surface of the end pieces formed of the casting material comprises a retaining structure formed thereon to cooperate with said retaining device, said retaining structure being located at a portion of the end pieces which is sealed against a volume of the filter housing which is in fluid connection with the non-filtrate inlet and which is further sealed against a volume of the filter housing which is in fluid connection with the filtrate outlet by a first and a second sealing element, respectively. The casting material of the end pieces sealingly engages the filter element at its end portions.

The filter element may comprise a plurality of capillary or hollow fibre membranes. Alternately, the filter element may comprise one or more flat tubular membranes optionally spirally wound around the longitudinal axis of the filter cartridge.

In order to provide a well defined flow path from one end piece to the other the flat tubular membranes comprise a spacer sheet which holds the membrane walls apart from each other.

The retaining structure is integrally formed in the peripheral surface of the end pieces and cooperates with a retaining device, which retaining device and retaining structure interengage slackly.

It is not necessary to apply a radial clamping force to the end pieces. The term "slackly" means that an interspace is present between the retaining device and the retaining structure, such that movement of the filter cartridge is made possible at least in the lengthwise or axial direction of the filter housing. Slackness (play) can be provided in the radial and/or axial direction in order to compensate for movement and/or geometrical changes of the filter cartridge due to thermal influences. Thus, unlike the embodiments of the prior art, substantially form-determined retaining means are provided which permit restricted mobility of the filter cartridge in at least one direction as caused, for example, by changes in length resulting from thermal influences. The retaining device secures the cartridge and exerts its retaining function only when the retaining device bears against the retaining structure due to displacement or to a change in length of the cartridge.

Manufacture of the filtering device is cheap because the inventive filter cartridge does not require a separate housing and the material used for the retaining device and that used for the casting material are freely selectable. For example, parts of plastics material can be used for the retaining device.

Another advantage is that the casting material (also called hereinafter: sealing compound) need not be modified for adaptation of the coefficients of thermal expansion and, in particular, requires no modification with fillers impairing the strength properties of the sealing compound.

Radial play is important when the sealing compound itself undergoes strong material expansion relatively to the housing. Axial mobility of the filter cartridge should be permissible with regard to increases in length of the filter elements. The design of the filter and the materials used for the filtering device dictate whether both radial and axial mobility should be allowed for by the retaining device and the retaining structure.

Axial movement may be permitted in both axial directions or in only one axial direction, this depending on the arrangement of the sealing elements. Thus according to one embodiment, for example, at least one sealing element can be disposed on the peripheral surface of the sealing compound (end piece) on each side of the retaining structure. The sealing elements used may be sealing rings, particularly O-rings. In this embodiment, axial displacement of the filter cartridge does not impair the seal provided by the sealing elements so that axial shifts in both axial directions are permissible.

The dimensions of the retaining structures and retaining devices can be such that, following installation thereof, an interspace is made available at each end of, and adjacent to, the retaining device, which interspace can be utilized for compensating changes in length. Restriction of the increase in length may be necessary to prevent the sealing elements from slipping off and the seal between the parts from becoming untight.

According to another embodiment, a sealing element can be disposed on the end face of the filter cartridge. The sealing element is disposed in this case between the sealing compound and the filter head and is compressed during installation so that a sealing closure is provided from the outset. Elongation of the cartridge is permissible in this case, since this manifests itself only by further compression of the sealing element. The arrangement and size of the retaining structures and retaining devices must in this case be such as to substantially exclude a contraction in length, which would lead to the exposure of the end face sealing element. This means that in this embodiment an interspace is provided between the retaining device and retaining structure at one end only.

The retaining devices may also be disposed between the filter head and a sealing ring carrier having at least one sealing element bearing against the sealing compound of the end pieces.

A second sealing element can be disposed in a sealing ring carrier, this bearing against a housing part.

In both cases there is disposed at least one sealing element between the sealing compound and the housing.

A suitable retaining structure and retaining device is, for example, a retaining ring divided in ring segments and an annular groove, respectively. On account of the permissible play, no very high demands on the precision of the groove need be satisfied, as is the case with sealing grooves. In this case it is an advantage when the annular groove exhibits a trapeziform cross-section, in which case the divided retaining ring should also exhibit a trapeziform cross-section so that, on the one hand, assembly of the parts is facilitated and, on the other hand, centering of the filter cartridge is possible. Such a divided retaining ring can, for example, be jammed in between the filter head and filter cartridge housing.

The retaining ring can preferably be produced from plastics material, eg, by injection molding. Such injection moldings are cheaper than metal rings, particularly when the parts of the ring preferably exhibit means for snapping together, which facilitates assembly.

The flanks of the groove should be formed in such a manner that they can absorb high axial forces. The base of the groove can be of any desired shape.

Additional structures in, say, the groove or the retaining device can serve as anti-twist stops.

In addition, further retaining structures can be disposed on the retaining ring, which engage corresponding structures on the filter housing.

According to another embodiment, the retaining device can comprise retaining bolts and the retaining structure radial blind holes provided in the sealing compound of the end pieces. In order to allow for axial movement of the filter cartridge, the diameters of the blind holes are greater than the outside diameters of the retaining bolts.

The present invention further relates to a process for manufacturing a filter cartridge as defined in claim 15.

Both end portions of the filter element may be positioned simultaneously to extend into the moulds for forming the respective end pieces of the filter cartridge or only one mould may be used to sequentionally cast the end pieces of the cartridge.

First of all the end portions of the filter element are embedded in the casting material (sealing compound). When the face sections of the end pieces are removed, preferably cut off, the end portions of the filter element are openly accessible at the end piece faces and the filter element then provides a fluid flow path from one end piece to the other.

Because of this, the filter element need not be positioned very precisely in lengthwise direction with their end portions in the mould cavity which facilitates production of the end pieces.

Because of the unitary structure of the cap and the cylindrical insert, perfect sealing surfaces are obtained on either side of the retaining structure of the end pieces without having the need of finishing such surfaces after release of the end pieces from the mould.

The retaining structure surface quality is not critical since the surface does not have a sealing function. The surface marks resulting from the use of a divided ring in the area of the retaining structure are very well tolerable.

Exemplary embodiments of the invention are illustrated below with reference to the drawings.

In the drawing:
- Fig. 1: is a longitudinal cross-section through a filtering device in the region of a filter head according to another embodiment;
- Fig. 2: is a side view of one end of a filter cartridge as shown in Figure 1;
- Fig. 3: is a side view of one end of a filter cartridge according to another embodiment;
- Fig. 4: is a longitudinal cross-section through the mould for the production of the sealing compound of a filter cartridge;
- Fig. 5: is a longitudinal cross-section through a filtering device in the region of a filter head according to another embodiment;
- Fig. 6: is a longitudinal cross-section through a filtering device in the region of a filter head according to another embodiment;
- Fig. 7: is a top end view of a face of a specific embodiment of an inventive filter cartridge; and
- Fig. 8: is a top end view of a face of another specific embodiment of an inventive filter cartridge.

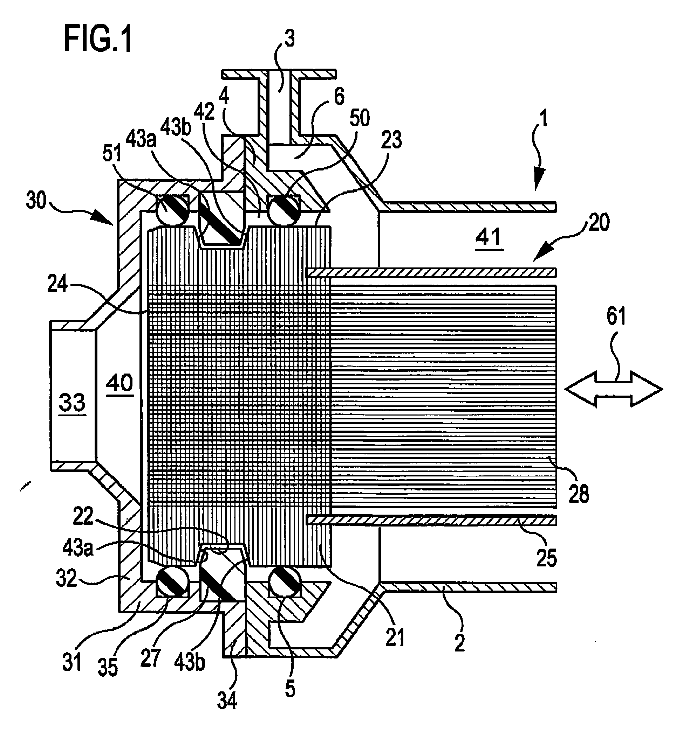

Fig. 1 shows a filtering device having a cylindrical filter housing 1 in which a filter cartridge 20 is disposed. The filter cartridge 20 comprises a filter element in the form of a bundle 28 of capillary or hollow fiber membranes, which is embedded at both ends in a sealing compound forming end pieces 21 (Fig. 1 shows only the left hand side) Between the two end pieces 21 the bundle 28 is surrounded by a net 25 as protection during transportation, this net 25 also being embedded in the sealing compound of end pieces 21. The end pieces have on their peripheral surfaces a sealing face 23, against which an O-ring 50 bears which is locked in position in a groove 5 of the filter housing 1. Furthermore, the filter housing 1 possesses annular outflow channels 6 and two filtrate outlets 3. The filtrate chamber 41 is disposed between the filter cartridge 20 and the housing wall 2.

The filter head 30 possesses an annular recess in which a split retaining ring 27 can be fitted in between the filter head 30 and the filter cartridge housing 1. This retaining ring 27 engages a retaining structure in the form of a groove 22 in the peripheral surface of the end piece 21 by which means the filter cartridge 20 is secured.

The groove 22 possesses a trapeziform cross-section corresponding to the trapeziform cross-section of the retaining ring 27. The width and depth of the groove 22 are slightly greater than the width of the trapeziform inside contour of the retaining ring so that an interspace 43 (shown on an enlarged scale) is formed, which allows for radial expansion and axial displacement of the filter cartridge in the direction of the arrows 60 if the dimensions of the filter cartridge 20 should change on account of temperature variations. Preferably, an interspace 43 is disposed on the side of the retaining ring 27 remote from the end face 24, while on the opposite side the retaining ring 27 bears against the sidewall of the groove 22. This ensures that the O-ring 51 situated on the end face always sealingly bears against the head wall 12. The wedge-shaped surfaces of the groove 22 and of the retaining ring 27 allow for simple assembly and alignment of the filter cartridge 20.

The retaining ring 27 is encased and is disposed in an annular securing chamber 42 which is sealed off from both the filtrate chamber 41 and the non-filtrate chamber 40. This prevents the retaining ring 27 from contaminating the filtrate.

The arrangement of groove 22 and retaining ring 27 is such that the O-ring 51 is kept under pressure and thus sealingly bears against the head wall. Even in the case of axial displacement of the filter cartridge the seal holds and the O-ring 51 is at most additionally compressed.

Fig. 1 illustrates an embodiment where both O-rings 50 and 51 bear against the peripheral surface 23 of the sealing compound of end piece 21. The collar 31 of the filter head 30, which exhibits a head wall 32, a non-fiiltrate inlet 33, and a securing flange 34, accordingly possesses an annular groove 35 to accommodate the second O-ring 51. In this embodiment also, the retaining ring 27 is encased and sealed off and contacts neither the non-filtrate nor the filtrate.

Since both O-rings 50 and 51 are disposed on the peripheral surface 23, the width of the groove 22 and the arrangement of the retaining ring 27 can be such that on both sides of the retaining ring 27 an interspace 43a, b, is formed which allows for displacement of the filter cartridge in both directions, as indicated by the arrows 61.

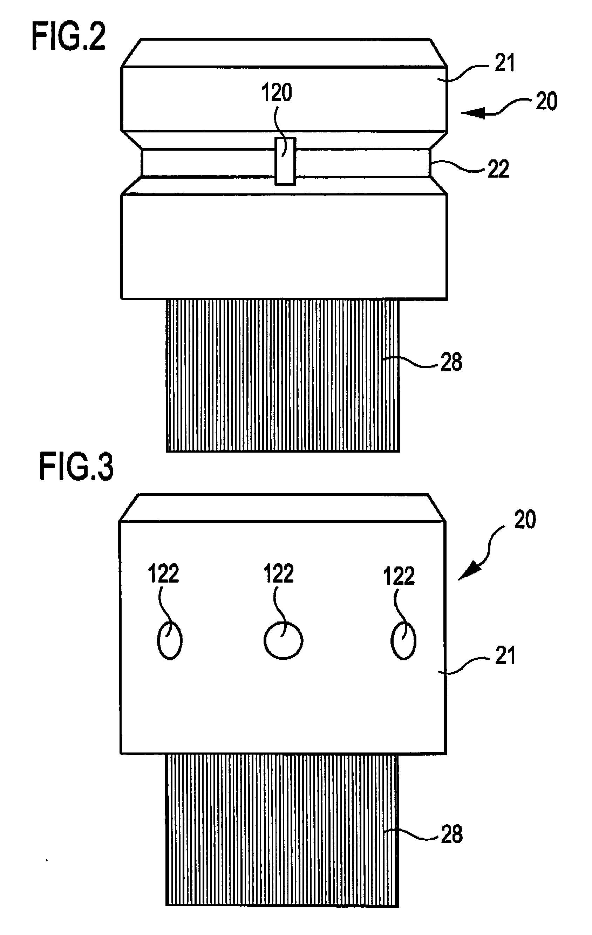

Fig. 2 is a partial side view of the filter cartridge shown in Figure 1 . The groove 22 can show a bulged portion 120, which extends in the axial direction and acts as an anti-twist stop. The axial displaceability of the filter cartridge 20 is not hindered by this means. It merely prevents twisting or turning of the filter cartridge during operation.

Fig. 3 illustrates another embodiment, in which the retaining structure consists of blind holes 122 distributed around the periphery of the sealing compound 21. These blind holes 122 are engaged by pins or bolts, which can be removeably secured between the end pieces 21 and the filter housing 1 like the retaining ring 27.

In order to guarantee axial mobility of the filter cartridge 20 as such, the diameter of the blind bores 122 can be greater than the diameter of the pins engaging said blind bores 122.

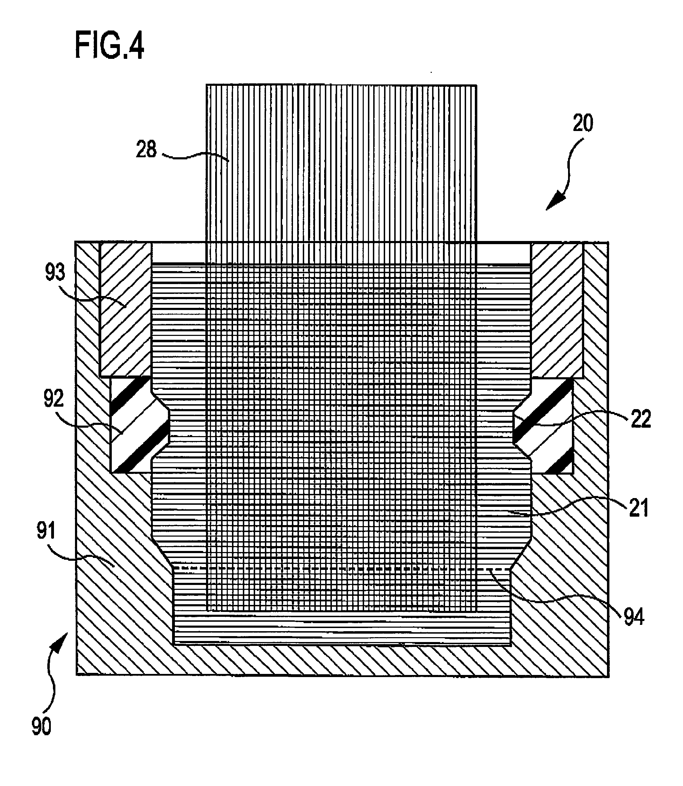

Figure 4 is a longitudinal cross-section through a mould 90 for the production of the end piece 21. The mould 90 comprises a unitary cap 91, a divided retainer ring 92, and a cylindrical insert 93. The axially symmetrical inner wall portion adjacent the closed end of the cap 91 and the axially symmetrical cylindrical insert 93 form the surfaces of the end piece 21 serving as sealing surfaces for the seals. Mold release is carried out in the axial direction, while the divided retainer ring 92 is removed radially from the moulded end piece.

After removal of the end piece 21 from the mould 90 a face portion is cut off along the broken line 94. The end portions of the filter element (bundle 28 of capillary fibers) are now accessible at each face of the end pieces 21 and provide a flow path for a fluid extending from one end portion of the cartridge to the other.

While Fig. 4 shows a divided ring, from the retaining structure of the end piece as shown in Fig. 1, it is easily conceivable that other types of structures of the divided ring that radically projects inwards from the cylindrical wall portion of cap 91 will give rise to retaining structures as shown in Fig. 2 and 3.

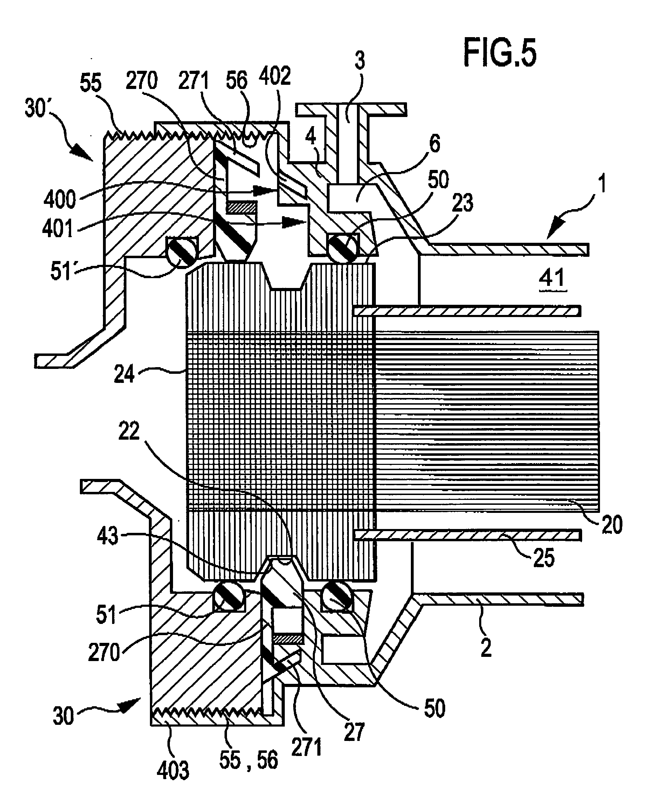

Figure 5 illustrates another embodiment, which exhibits a modified head 30' having, on its external surface, a male thread 55 which cooperates with a female thread 56 in the cartridge housing 2. The securing flange 4 possesses two steps 400, 401 and an annular wall 403 provided with the female thread 56. In the step there is disposed an inwardly extending annular slanted groove 402.

The retaining ring 27 is extended radially outwardly in the form of a fin 270, at the outer end of which slanted fins 271 are disposed, these being distributed around the entire periphery of said ring.

When the head 30' is screwed on, the retaining ring 27 moves toward the slanted groove 402 such that the fins 271 engage the slanted groove 402. This leads to arrestment of the retaining ring 27. When the head 30' is removed, the divided retaining ring 27 is drawn back. Due to the fins 271 cooperating with the groove 402, axial motion of the head 30' is transformed to radial motion of the parts of the retainer ring 27.

The upper half of Figure 5 shows the arrangement when head 30' is partially screwed off. The lower half shows the locked filter cartridge with head 30' screwed on. Instead of a screw construction there may be provided a flange-like connection comprising stay bolts and nuts.

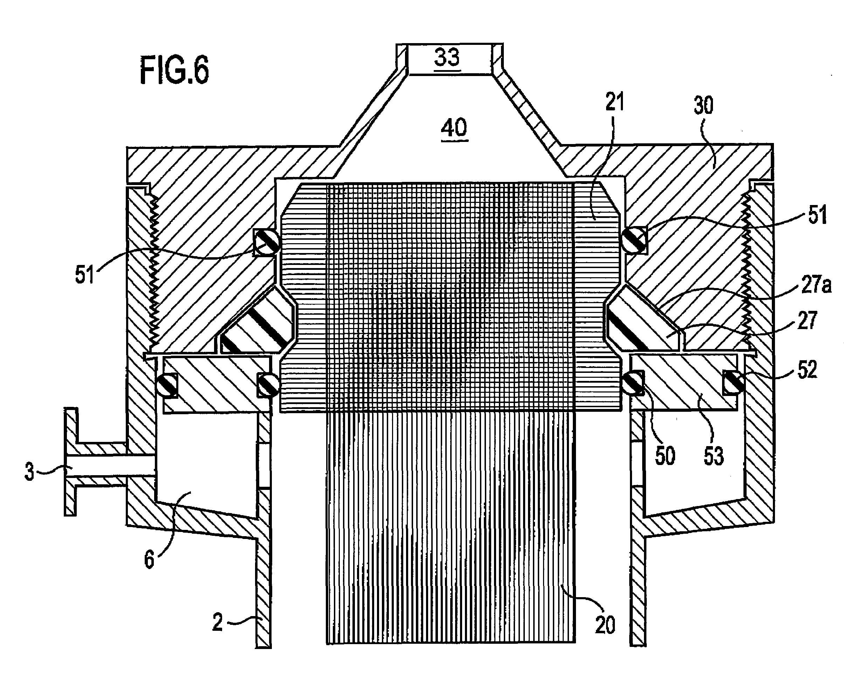

Figure 6 illustrates another embodiment, which exhibits a modified sealing ring carrier 53 and retaining ring 27. The sealing ring carrier 53 carries, on its inner surface, the sealing ring 50 and, on its external surface, the sealing ring 52, and closes the annular filtrate channel 6. The retaining ring 27 possesses an inclined surface 27a so that when the filter head is screwed on, the retaining ring 27 is pressed against the sealing ring carrier 53 and is compressed against the housing. During assembly, the slide-in cartridge is simultaneously pushed into its optimum position.

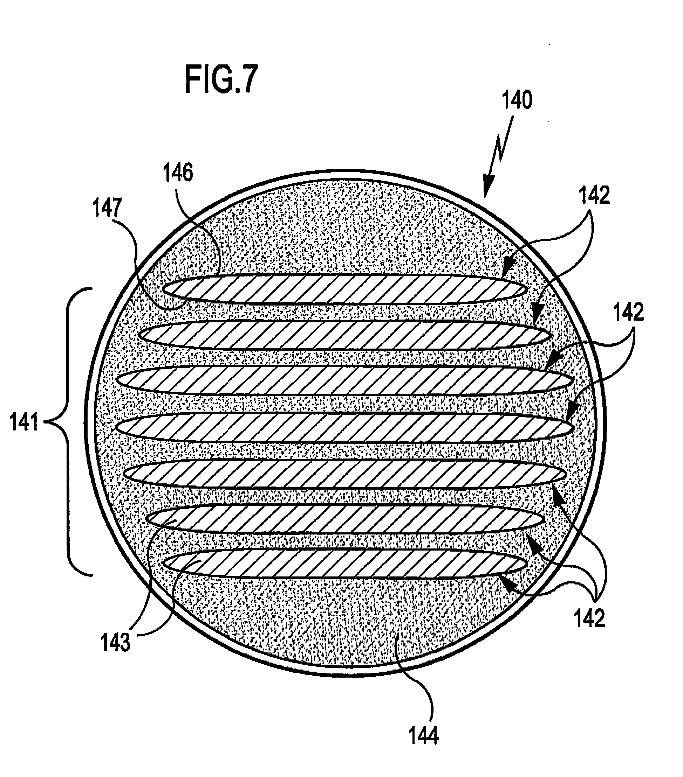

Fig. 7 shows a front view of the front face of an end piece 140 of a filter cartridge which includes a plurality of flat tubular membranes 142 arranged in parallel to one another which form the filter element 141. The width of the flat tubular membranes 142 varies so as to make maximum use of the width of the end piece, maximizing the membrane surface area of the filter element. In order to keep the coextensive walls 146, 147 of a flat tubular membrane 142 apart from one another a spacer 143 in sheet form is inserted in each of the membranes 142. The spacer 143 prevents the tubular membrane 142 from collapsing which would make the individual memrane 142 inoperative but does not hinder fluid flow in the lengthwise direction of the tubular membrane 142.

The tubular membranes 142 are sealingly embedded in a casting material 144 made of a sealing compound which forms the end piece 140 and are kept at a predefined distance from each other.

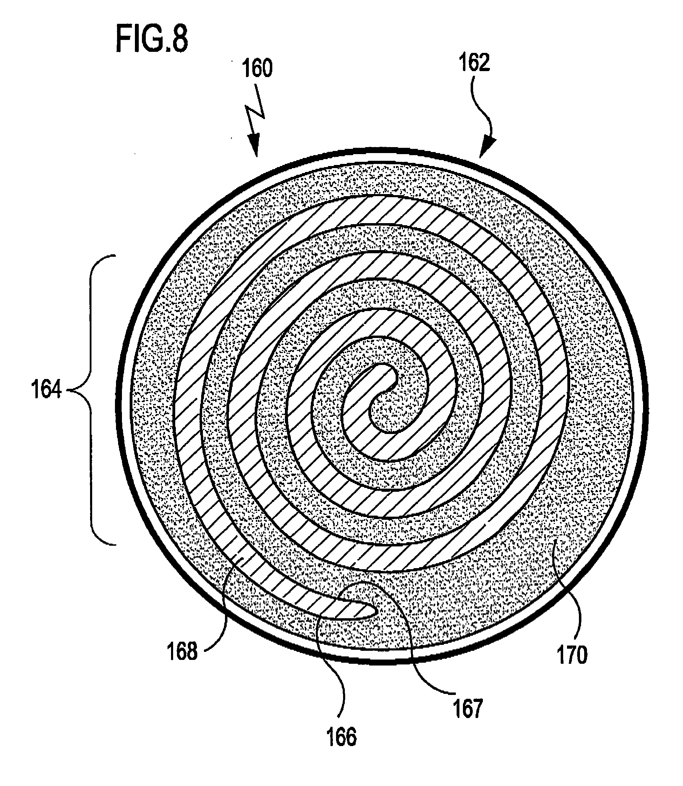

Fig. 8 again shows a front view of the front face of an end piece 160 of a filter cartridge which comprises a flat tubular membrane 162 which forms a filter element 164. The flat tubular membrane 162 is spirally wound around a longitudinal axis while the windings of the tubular membrane 162 are kept at a certain distance from one another. The coextensive walls 166, 167 of the flat tubular membrane 162 are kept apart from each other by a spacer sheet 168. The end portion of filter element 164 is embedded in a casting material 170 fixing the windings of the flat tubular membrane 162 at a predefined distance.

It is easily conceivable that not only one flat tubular membrane may be used in this type of filter element but two or more flat tubular membranes may be used and spirally wound around a longitudinal axis.

When embedding the end portions of these filter elements 141 and 164 in the casting material 144 and 170, respectively, the tubular membranes or their windings may be kept apart from each other by spacer elements which are also embedded in the casting material (not shown in Fig. 7 and 8) and which have no more function once the end portion of the filter element 141 and 164 is fixedly held by the casting material 144 and 170, respectively,

The sealing surfaces and the retaining structure can be selected independently of the type of filter element used and therefore any of the embodiments of Fig. 1 to 3 and 5 and 6 may be used in connection with the specific filter elements used in Fig. 7 and 8.

### Reference numerals:

- 1: filter housing
- 1a: filter cartridge housing
- 2: housing wall
- 3: filtrate outlet
- 4: securing flange
- 5: annular groove
- 6: annular filtrate channel
- 10: filter head
- 11: collar
- 12: head wall
- 13: non-filtrate inlet
- 14: securing flange
- 15: annular recess
- 20: filter cartridge
- 21: sealing compound
- 21a: radial projection
- 22: groove
- 23: peripheral surface
- 24: end face
- 25: net
- 27: retaining ring
- 27a: inclined surface
- 28: bundle of capillary and hollow fiber membranes
- 29: groove
- 30: filter head
- 31: collar
- 32: head wall
- 33: non-filtrate inlet
- 34: securing flange
- 35: annular groove
- 40: non-filtrate chamber
- 41: filtrate chamber
- 42: annular securing chamber
- 43: interspace
- 43a, 43b: interspace
- 60, 50': O-ring, sealing element
- 51, 51': O-ring, sealing element
- 52: O-ring
- 53: sealing ring carrier
- 55: male thread
- 56: female thread
- 60: direction of arrow
- 61: direction of arrow
- 90: mold
- 91: cap
- 92: divided retainer ring
- 93: cylindrical insert
- 94: broken line
- 140: end piece
- 141: filter element
- 142: membrane
- 143: spacer
- 144: casting material
- 146, 147: membrane walls
- 160: end piece
- 162: membrane
- 164: filter element
- 166, 167: membrane walls
- 168: spacer sheet
- 170: casting material
- 120: bulged portion
- 122: blind hole
- 222: male thread
- 270: fin
- 271: fin
- 322: bayonet closing structure
- 400: step
- 401: step
- 402: slanted groove
- 403: wall

## Claims

1. A replaceable filter cartridge (20) for insertion into a filter housing of a filtering device and a retaining device for supporting said filter cartridge in said filter housing, comprising a filter element, the filter element being fixed at both ends of the cartridge in end pieces (21), wherein the filter element fixed in said end pieces defines a flow path for a fluid extending from one end of the cartridge to the other; wherein the end pieces (21) are made of a casting material in which said end portions of the filter elements are embedded, wherein the outer surface of each end piece (21) formed of the casting material comprises a retaining structure formed thereon, said retaining structure being located at a portion of the respective end piece (21) which is sealable against a volume of the filter housing which is in fluid connection with the non-filtrate inlet and which is further sealable against a volume of the filter housing which is in fluid connection with the filtrate outlet by a first and a second sealing element, respectively, disposed on the peripheral surface of the sealing compound of the end piece on each side of the retaining structure, and wherein said retaining device and said retaining structure being designed to interengage slackly to thereby allow a movement of the filter cartridge when inserted into a filter housing relative to said filter housing in the longitudinal and/or radial direction thereof.

2. The filter cartridge of claim 1, wherein said filter element comprises a bundle (28) of capillary or hollow fiber membranes.

3. The filter cartridge of claim 2, wherein said bundle of fiber membranes is surrounded by a net for protection of the fiber membranes, wherein said net is embedded in the sealing compound of the end pieces.

4. The filter cartridge of claim 1, wherein the filter element comprises one or more flat tubular membranes.

5. The filter cartridge of claim 4, wherein said one or more flat tubular membranes are spirally wound about the longitudinal axis of the filter cartridge.

6. The filter cartridge of claim 4 or 5, wherein said tubular membrane comprises a spacer sheet.

7. The filter cartridge of any one of claims 1 to 6, wherein said retaining structure is integrally formed in the peripheral surface of the end pieces.

8. The filter cartridge as defined in any one of claims 1 to 7, wherein said retaining device is a retaining ring (27) divided in a multiplicity of ring segments and wherein said retaining structure is an annular groove (22) engaged by said retaining ring (27).

9. The filter cartridge as defined in claim 8, wherein the annular groove (22) has a trapeziform cross-section.

10. The filter cartridge of claim 8 or 9, wherein said annular groove has flanks designed to absorb high axial forces.

11. The filter cartridge as defined in any one of claims 1 to 7, wherein said retaining device comprises retaining bolts and said retaining structure consists of radial blind holes (122) which are engaged by said bolts.

12. The filter cartridge as defined in claim 11, wherein the retaining ring (27) exhibits fixing structures (271) which cooperate with complementary structures on the filter cartridge housing (1).

13. The filter cartridge as defined in any one of claims 1 to 12, wherein at least one of the sealing elements is in the form of a grooved ring accommodating at least one sealing ring.

14. The filter cartridge as defined in claim 13, wherein said end pieces (21) having a projection (21a) radially extending from the circumference of the end pieces and wherein the grooved ring (53) abuts against said projection (21a).

15. A process for manufacturing a filter cartridge as defined in any one of claims 1 to 14, comprising the steps of
- providing at least one filter element having two end portions
- providing a mould for forming end pieces of the filter cartridge accommodating one of the end portions of the filter element;
- positioning the filter element with one end portion extending into said mould;
- feeding a casting material into said mould to form a first end piece of the filter cartridge accommodating one of the end portions of the filter element;
- releasing the first end piece from the mould;
- positioning the filter element with its other end portion extending into said mould;
- feeding a casting material into said mould to form a second end piece to accommodate the other end portion of the filter element;
- releasing the second end piece from the mould;
- removing face portions of the first and the second end pieces such as to provide open end portions of the filter element accessible from each face of the first and second end piece and providing a flow path for a fluid extending from one end portion of the cartridge to the other;
wherein the mould used for forming the end pieces comprises a unitary cap closed at one end, a divided ring and a unitary cylindrical insert; said cap comprising in its interior a cylindrical wall portion adjacent to the closed end of the cap for forming a first sealing surface on the exterior of the end piece, a first recess to accommodate said divided ring and a second recess to accommodate said unitary insert,
said divided ring being positioned in between said cylindrical wall portion and said cylindrical insert and having a structure that radially projects inwards from said cylindrical wall portion to form a recessed retaining structure on the exterior of said end piece, and
said cylindrical insert having an inner cylindrical wall which is coextensive with said cylindrical wall portion of said cap for forming a second sealing surface on the exterior of said end piece.

## Patentansprüche

1. Austauschbare Filterpatrone (20) zum Einführen in ein Filtergehäuse einer Filtervorrichtung und eine Haltevorrichtung zum Halten der Filterpatrone in dem Filtergehäuse, umfassend ein Filterelement, wobei das Filterelement an beiden Enden der Patrone in Endstücken (21) fixiert ist, wobei das in den Endstücken fixierte Filterelement einen Fließweg für ein Fluid definiert, der sich von einem Ende der Patrone zum anderen erstreckt; wobei die Endstücke (21) aus einem Gießmaterial hergestellt sind, in welchem die Endbereiche der Filterelemente eingebettet sind, wobei die äußere Oberfläche jedes aus dem Gießmaterial gebildeten Endstücks (21) eine an ihr ausgebildete Haltestruktur umfasst, wobei sich die Haltestruktur an einem Bereich des jeweiligen Endstücks (21) befindet, der - über ein erstes bzw. zweites, an der peripheren Oberfläche der Dichtungsmasse des Endstücks auf jeder Seite der Haltestruktur angeordnetes Dichtelement - gegen ein Volumen des Filtergehäuses abdichtbar ist, welches in Fluidverbindung mit dem Unfiltrateinlass steht, und ferner gegen ein Volumen des Filtergehäuses abdichtbar ist, welches in Fluidverbindung mit dem Filtratauslass steht, und wobei die Haltevorrichtung und die Haltestruktur so ausgebildet sind, dass sie lose in gegenseitigem Eingriff stehen, um **dadurch** der Filterpatrone bei Einführen in ein Filtergehäuse eine Bewegung relativ zu dem Filtergehäuse in dessen Längs- und/oder Radialrichtung zu erlauben.

2. Filterpatrone nach Anspruch 1, wobei das Filterelement ein Bündel (28) von Kapillar- oder Hohlfasermembranen umfasst.

3. Filterpatrone nach Anspruch 2, wobei das Bündel von Fasermembranen zum Schutz der Fasermembranen von einem Netz umgeben ist, wobei das Netz in der Dichtungsmasse der Endstücke eingebettet ist.

4. Filterpatrone nach Anspruch 1, wobei das Filterelement eine oder mehrere flache Schlauchmembranen umfasst.

5. Filterpatrone nach Anspruch 4, wobei die eine oder die mehreren flachen Schlauchmembranen spiralig um die Längsachse der Filterpatrone gewickelt sind.

6. Filterpatrone nach Anspruch 4 oder 5, wobei die Schlauchmembran eine Abstandshalterschicht umfasst.

7. Filterpatrone nach einem der Ansprüche 1 bis 6, wobei die Haltestruktur in der peripheren Oberfläche der Endstücke integral ausgebildet ist.

8. Filterpatrone nach einem der Ansprüche 1 bis 7, wobei die Haltevorrichtung ein Haltering (27) ist, der in eine Vielzahl von Ringsegmenten aufgeteilt ist, und wobei die Haltestruktur eine Ringnut (22) ist, mit welcher der Haltering (27) in Eingriff steht.

9. Filterpatrone nach Anspruch 8, wobei die Ringnut (22) einen trapezförmigen Querschnitt aufweist.

10. Filterpatrone nach Anspruch 8 oder 9, wobei die Ringnut zur Aufnahme hoher axialer Kräfte ausgebildete Flanken aufweist.

11. Filterpatrone nach einem der Ansprüche 1 bis 7, wobei die Haltevorrichtung Haltebolzen umfasst und wobei die Haltestruktur aus radialen Blindlöchern (122) besteht, mit welchen die Bolzen in Eingriff stehen.

12. Filterpatrone nach Anspruch 11, wobei der Haltering (27) Fixierungsstrukturen (271) aufweist, welche mit komplementären Strukturen an dem Filterpatronengehäuse (1) zusammenwirken.

13. Filterpatrone nach einem der Ansprüche 1 bis 12, wobei mindestens eines der Dichtelemente in der Form eines Nutrings vorliegt, der mindestens einen Dichtring aufnimmt.

14. Filterpatrone nach Anspruch 13, wobei die Endstücke (21) einen sich vom Umfang der Endstücke radial weg erstreckenden Vorsprung (21a) aufweisen und wobei der Nutring (53) gegen den Vorsprung (21a) anliegt.

15. Verfahren zur Herstellung einer Filterpatrone nach einem der Ansprüche 1 bis 14, umfassend die Schritte:
- Bereitstellen mindestens eines Filterelements mit zwei Endbereichen;
- Bereitstellen einer Form zum Bilden von Endstücken der Filterpatrone, welche einen der Endbereiche des Filterelements aufnehmen;
- Positionieren des Filterelements derart, dass sich ein Endbereich in die Form hinein erstreckt;
- Zuführen eines Gießmaterials in die Form, um ein erstes Endstück der Filterpatrone zu bilden, welches einen der Endbereiche des Filterelements aufnimmt;
- Lösen des ersten Endstücks aus der Form;
- Positionieren des Filterelements derart, dass sich sein anderer Endbereich in die Form hinein erstreckt;
- Zuführen eines Gießmaterials in die Form, um ein zweites Endstück zu bilden, welches den anderen Endbereich des Filterelements aufnimmt;
- Lösen des zweiten Endstücks aus der Form;
- Entfernen von Stirnflächenanteilen des ersten und des zweiten Endstücks derart, dass offene Endbereiche des Filterelements bereitgestellt werden, die von jeder Stirnseite des ersten und des zweiten Endstücks zugänglich sind und einen Fließweg für ein Fluid bereitstellen, welcher sich von einem Endbereich der Patrone zum anderen erstreckt;
wobei die zum Bilden der Endstücke verwendete Form eine einstückig ausgebildete, einerends geschlossene Kappe, einen geteilten Ring und einen einstückig ausgebildeten zylindrischen Einsatz umfasst; wobei die Kappe in ihrem Inneren einen zylindrischen Wandbereich benachbart zu dem geschlossenen Ende der Kappe zum Bilden einer ersten Dichtoberfläche an dem Äußeren des Endstücks, einen ersten Rücksprung zum Aufnehmen des geteilten Rings und einen zweiten Rücksprung zum Aufnehmen des einstückigen Einsatzes umfasst,
wobei der geteilte Ring zwischen den zylindrischen Wandbereich und den zylindrischen Einsatz positioniert wird und eine Struktur aufweist, die von dem zylindrischen Wandbereich radial einwärts vorspringt, um eine rückspringende Haltestruktur an dem Äußeren des Endstücks zu bilden, und
wobei der zylindrische Einsatz eine innere zylindrische Wand aufweist, die sich koextensiv mit dem zylindrischen Wandbereich der Kappe erstreckt zum Bilden einer zweiten Dichtoberfläche an dem Äußeren des Endstücks.

## Revendications

1. Cartouche de filtre remplaçable (20) pour insertion dans un boîtier de filtre d'un dispositif de filtration, et un dispositif de retenue pour maintenir ladite cartouche de filtre dans ledit boîtier de filtre, comprenant un élément de filtre, l'élément de filtre étant fixé aux deux extrémités de la cartouche dans des pièces d'extrémité (21), dans laquelle l'élément de filtre fixé dans lesdites pièces d'extrémité définit une trajectoire d'écoulement pour un fluide s'étendant d'une extrémité de la cartouche à l'autre ; dans laquelle les pièces d'extrémité (21) sont réalisées avec un matériau de moulage dans lequel lesdites pièces d'extrémité de l'élément de filtre sont encastrées, dans laquelle la surface externe de chaque pièce d'extrémité (21) formée dans le matériau de moulage comprend une structure de retenue formée sur celle-ci, ladite structure de retenue étant située au niveau d'une partie de la pièce d'extrémité respective (21) qui est étanche contre un volume du boîtier de filtre qui est en raccordement de fluide avec l'entrée de produit non filtré et qui est en outre étanche contre un volume du boîtier de filtre qui est en raccordement de fluide avec la sortie de produit filtré par un premier et un second éléments d'étanchéité, respectivement, qui sont placés sur la surface de périphérie du composé d'étanchéité de la pièce d'extrémité de chaque côté de la structure de retenue, et dans laquelle ledit dispositif de retenue et ladite structure de retenue sont conçus pour se mettre en prise mutuellement avec du jeu pour permettre ainsi un mouvement de la cartouche de filtre lorsqu'elle est insérée dans un boîtier de filtre par rapport au dit boîtier de filtre dans la direction longitudinale et/ou la direction radiale de celui-ci.

2. Cartouche de filtre selon la revendication 1, dans laquelle ledit élément de filtre comprend un groupe (28) de membranes capillaires ou de fibres creuses.

3. Cartouche de filtre selon la revendication 2, dans laquelle ledit groupe de membranes à fibres creuses est entouré d'un filet pour protéger les membranes à fibres creuses, dans laquelle ledit filet est incorporé dans le composé d'étanchéité des pièces d'extrémité.

4. Cartouche de filtre selon la revendication 1, dans laquelle l'élément de filtre comprend une ou plusieurs membranes tubulaires plates.

5. Cartouche de filtre selon la revendication 4, dans laquelle ladite une ou lesdites plusieurs membranes tubulaires plates sont enroulées en spirale autour de l'axe longitudinal de la cartouche de filtre.

6. Cartouche de filtre selon la revendication 4 ou 5, dans laquelle ladite membrane tubulaire comprend une feuille formant une entretoise.

7. Cartouche de filtre selon l'une quelconque des revendications 1 à 6, dans laquelle ladite structure de retenue est intégralement formée dans la surface de périphérie des pièces d'extrémité.

8. Cartouche de filtre selon l'une quelconque des revendications 1 à 7, dans laquelle ledit dispositif de retenue est une bague de retenue (27) divisée en une multiplicité de segments annulaires et dans laquelle ladite structure de retenue est une rainure annulaire (22) mise en prise par ladite bague de retenue (27).

9. Cartouche de filtre selon la revendication 8, dans laquelle la rainure annulaire (22) a une section transversale trapézoïdale.

10. Cartouche de filtre selon la revendication 8 ou 9, dans laquelle ladite rainure annulaire possède des flancs qui sont configurés de façon à absorber des forces axiales élevées.

11. Cartouche de filtre selon l'une quelconque des revendications 1 à 7, dans laquelle ledit dispositif de retenue comprend des boulons de retenue et ladite structure de retenue se compose de trous borgnes radiaux (122) qui sont mis en prise par lesdits boulons.

12. Cartouche de filtre selon la revendication 11, dans laquelle la bague de retenue (27) présente des structures de fixation (271) qui coopèrent avec des structures complémentaires sur le boîtier de cartouche de filtre (1).

13. Cartouche de filtre selon l'une quelconque des revendications 1 à 12, dans laquelle au moins un des éléments d'étanchéité se présente sous la forme d'une bague rainurée logeant au moins une bague d'étanchéité.

14. Cartouche de filtre selon la revendication 13, dans laquelle lesdites pièces d'extrémité (21) ont une saillie (21a) qui s'étend radialement depuis la circonférence des pièces d'extrémité et dans laquelle la bague rainurée (53) vient en butée contre ladite saillie (21a).

15. Procédé de fabrication d'une cartouche de filtre selon l'une quelconque des revendications 1 à 14, le procédé comprenant les étapes consistant :
à réaliser au moins un élément de filtre ayant deux pièces d'extrémité ;
à réaliser un moule pour former des pièces d'extrémité de la cartouche de filtre logeant une des pièces d'extrémité de l'élément de filtre ;
à placer l'élément de filtre avec l'une de ses pièces d'extrémité s'étendant dans ledit moule ;
à fournir un matériau de moulage dans ledit moule pour former une première pièce d'extrémité de la cartouche de filtre logeant une des pièces d'extrémité de l'élément de filtre ;
à dégager la première pièce d'extrémité du moule ;
à placer l'élément de filtre avec son autre pièce d'extrémité s'étendant dans ledit moule ;
à fournir un matériau de moulage dans ledit moule pour former une seconde pièce d'extrémité de la cartouche de filtre pour loger l'autre pièce d'extrémité de l'élément de filtre ;
à dégager la seconde pièce d'extrémité du moule ;
à retirer des parties de dessus des première et seconde pièces d'extrémité de sorte à fournir des pièces d'extrémité ouvertes de l'élément de filtre qui sont accessibles depuis chaque face des première et seconde pièces d'extrémité et à réaliser une trajectoire d'écoulement pour un fluide s'étendant d'une pièce d'extrémité de la cartouche à l'autre ;
dans lequel le moule utilisé pour former les pièces d'extrémité comprend un bouchon unitaire fermé à l'une de ses extrémités, une bague divisée et un insert cylindrique unitaire ; ledit bouchon comprenant en son intérieur une partie de paroi cylindrique adjacente à l'extrémité fermée du bouchon pour former une première surface d'étanchéité sur l'extérieur de la pièce d'extrémité, un premier renfoncement pour loger ladite bague divisée et un second renfoncement pour loger ledit insert unitaire, ladite bague divisée étant placée entre ladite partie de paroi cylindrique et ledit insert cylindrique et ayant une structure qui fait saillie radialement vers l'intérieur depuis ladite partie de paroi cylindrique pour former une structure de retenue renfoncée sur l'extérieur de ladite pièce d'extrémité, et ledit insert cylindrique ayant une paroi cylindrique intérieure qui est coextensive avec ladite partie de paroi cylindrique dudit bouchon pour former une seconde surface d'étanchéité sur l'extérieur de ladite pièce d'extrémité.
